# EUROPEAN PATENT APPLICATION

(11) **EP 4 429 092 A1**
(43) Date of publication of application: **11.09.2024**
(21) Application number: 23160632.8
(22) Date of filing: 08.03.2023
(51) Int. Cl.: H02M 3/158, H02M 1/00, H02M 1/10, H02M 3/00, H02M 3/07

(54) **A MODULAR POWER CONVERTER AND A UPS**

(71) Applicant: ABB SCHWEIZ AG, 5400 Baden (CH)
(72) Inventor: ILLIANO, Enzo, 6512 Giubiasco (CH)
(74) Representative: Maiwald GmbH

(57) **Abstract**

The invention relates to the field of power converters, particularly to an unidirectional or bidirectional DC/DC, DC/AC, AC/DC or DC/AC converter, and to an uninterruptible power supply, UPS (11). The unidirectional DC/DC converter (10), comprises a DC input sub-circuit (20) comprising a forwarded first diode (D1) and a first switch (S1) arranged in series, the input sub-circuit (20) being arranged between a DC source (DC) and a central node (40); an output sub-circuit (60) comprising a forwarded second diode (D2) and a second switch (S2) arranged in series, the output sub-circuit (60) being arranged between the central node (40) and a load (Load); and a central sub-circuit (51) comprising an inductance (L1) in series with and directly connected to a parallel arrangement of: (i) a first capacitance (C1), (ii) a forwarded third diode (D3) and a third switch (S3) arranged in series, and (iii) a backwarded fourth diode (D4).

## Description

### Field of the Invention

The invention relates to the field of power converters, particularly to an unidirectional or bidirectional DC/DC, DC/AC, AC/DC or DC/AC converter, and to an uninterruptible power supply, UPS. The invention further relates to a method, to a program element, and to a computer-readable storage medium.

### Background

UPS (Uninterruptible Power Supply) systems according to state of the art usually require a dedicated set of inductors, capacitors, and control hardware. In order to keep switching losses low, the UPS' switches are often operated at low frequencies. This may, at least in some cases, lead to a system with bulky inductors and with a capacitor bank of the so-called "DC-Link" (a central node of a UPS system) of significant volume. Hence, a UPS of lower dimensions may be desirable.

### Description

It is an objective of the invention to provide a UPS with improved components and/or subsystems. This objective is achieved by the subject-matter of the independent claims. Further embodiments are evident from the dependent claims and the following description.

The solution strategy is based on a highly modular concept of the subsystems. Due to this modular concept, the basic principle, the subsystems and/or the components may not only be used for (or applied to) a UPS, but also for DC/DC converters. As explained in detail further below, this principle may also be applied to to a DC/AC converter, to an AC/DC converter, and to an AC/AC converter, in a unidirectional and/or bidirectional version, and to a UPS, which may be connected to an AC and/or to a DC input and to an AC output or to a DC output. For a better understanding, the principle will firstly be explained based on an embodiment with a lowest number of components, and modular extensions will be introduced in a stepwise way.

One aspect relates to a unidirectional DC/AC converter, comprising:
a DC input sub-circuit comprising a forwarded first diode and a first switch arranged in series, the input sub-circuit being arranged between a DC source and a central node;
an output sub-circuit comprising a forwarded second diode and a second switch arranged in series, the output sub-circuit being arranged between the central node and
a load; and
a central sub-circuit comprising an inductance (also called "inductor") in series with and directly connected to a parallel arrangement of: (i) a first capacitance, (ii) a forwarded third diode and a third switch arranged in series, and (iii) a backwarded fourth diode.

A DC/DC converter converts a DC input voltage ("DC source") to an DC output voltage, which is usually connected to a load, i.e. any consumer of DC power. A unidirectional DC/DC converter has a DC source connected to its input side and a load connected to its output side. A bidirectional DC/DC converter has a DC source connected to its input side and a load connected to its output side, and the "output side" can, additionally, be used as power source and the "input side" can, additionally, be used as power sink, usually for loading an accumulator (or similar devices, e.g. a capacitor) on the "input side". This input sub-circuit is arranged between a DC source and a central node. The "central node" may have a similar position as a so-called "DC-Link" of a traditional UPS system.

The DC/DC converter comprises a DC input sub-circuit comprising a forwarded first diode and a first switch arranged in series. A "forwarded" diode is a diode arranged in forward direction or pass direction, whereas a "backwarded" diode is a diode arranged in reverse direction or blocking direction. For instance, if the DC source has its plus terminal connected to an input terminal of the DC/DC converter, the diode's anode side is oriented towards the input terminal. The first switch is arranged in series with said forwarded first diode.

The DC/DC converter further comprises an output sub-circuit comprising a forwarded second diode and a second switch arranged in series. The output sub-circuit is arranged between the central node and a DC load. A capacitor may be arranged in parallel to the DC load, e.g. for further reducing the output's ripple.

The DC/DC converter further comprises a central sub-circuit. The central sub-circuit comprises an inductance, which is arranged in series with and directly connected to a parallel arrangement of: (i) a first capacitance, (ii) a forwarded third diode and a third switch arranged in series, and (iii) a backwarded fourth diode. The backwarded fourth diode may be used for discharging the inductance completely; see below for further details.

The inductance and the first capacitance of the central sub-circuit may build a series resonant circuit, whose resonance frequency may be quite high, e.g. higher than 10 kHz, 50 kHz, or even higher than 200 kHz. The resonance frequency may depend on the switches that are used in the DC/DC converter. Besides the elements of the resonant circuit, the central sub-circuit has, additionally, the third switch arranged in series with a forwarded third diode. This switch (arranged in series with a forwarded third diode) is arranged in parallel to the capacitance, so that - in an early phase of the conversion - current can flow through the inductance without needing to pass through the first capacitance. In this way it is possible to pre-charge the inductor before sending energy to both the inductor and the capacitance (which may start an oscillation step of this series-LC-circuit). The final result and goal is that the capacitance gets more energy than if the swinging would had started without a pre-charged inductance. The resulting energy in the inductance may depend on the duration of having the third switch closed. Hence, the power and/or the voltage delivered to the output load may be controlled by the closing time of the third switch (and additional factors, like the "pausing time" between conversion cycles; see below).

This principle does not only lead to significantly lower dimensions of the converter, e.g. due to the high frequency at which the converter is operated. As a result, the components and/or subsystems of the converter may be improved, e.g. in terms of size and/or cost. Furthermore, this principle can be used both for a boost converter and for a buck converter. For a boost converter (Uₒᵤₜ > Uᵢₙ), the duration of having the third switch closed may be varied, depending on the desired output voltage Uₒᵤₜ. For a buck converter (Uₒᵤₜ < Uᵢₙ), the third switch may be kept open, and only the switching frequency of the first switch (controlled indirectly by the duration of "pauses") may be varied, depending on the desired output voltage Uₒᵤₜ. If the DC/DC converter is only to be used as a buck converter, the forwarded third diode and the third switch may be abandoned. For a buck converter, the voltage regulation may only have an impact on the duration of the "pauses". The pulse width of the first switch is determined by the inductor and the capacitance and, thus, cannot vary.

An aspect relates to a unidirectional DC/AC converter, comprising:
a DC input sub-circuit comprising a forwarded first diode and a first switch arranged in series, the input sub-circuit being arranged between a DC source and a central node;
an additional DC input sub-circuit comprising a forwarded sixth diode and a sixth switch arranged in series, arranged between a second DC source and the central node,
wherein a second terminal of the DC source and a second terminal of the second DC source are connected to ground,
an output sub-circuit comprising a forwarded second diode and a second switch arranged in series, and an antiparallel output sub-circuit comprising a backwarded second diode and an antiparallel second switch arranged in series, the output sub-circuit and the antiparallel output sub-circuit being arranged between the central node and a load; and
a central sub-circuit comprising an inductance in series with and directly connected to a parallel arrangement of: (i) a first capacitance, (ii) a forwarded third diode and a third switch arranged in series, and (iii) a backwarded fourth diode and a fourth switch arranged in series.

Hence, compared to the unidirectional DC/DC converter, an additional DC input sub-circuit has been added, which is configured to be connected to a second DC source that has an opposite polarity than the (first) DC source. For instance, if the DC input sub-circuit is connected to a plus terminal of the (first) DC source, the additional DC input sub-circuit is connected to a minus terminal of the second DC source. Due to this, the load cannot only by supplied with a positive half-wave, but also with a negative half-wave, so that an AC-wave can be built at the converter's output.

An aspect relates to a unidirectional AC/AC converter or AC/DC converter, comprising:
an AC input sub-circuit comprising a forwarded fifth diode and a fifth switch arranged in series, and an antiparallel AC input sub-circuit comprising a backwarded fifth diode and an antiparallel fifth switch arranged in series, the AC input sub-circuit and the antiparallel AC input sub-circuit being arranged between a AC source and the central node;
an output sub-circuit comprising a forwarded second diode and a second switch arranged in series, and an antiparallel output sub-circuit comprising a backwarded second diode and an antiparallel second switch arranged in series, the output sub-circuit and the antiparallel output sub-circuit being arranged between the central node and a load; and
a central sub-circuit comprising an inductance in series with and directly connected to a parallel arrangement of: (i) a first capacitance, (ii) a forwarded third diode and a third switch arranged in series, and (iii) a backwarded fourth diode and a fourth switch arranged in series.

An aspect relates to a bidirectional DC/AC converter, comprising:
a DC input sub-circuit comprising a forwarded first diode and a first switch arranged in series, and an antiparallel input sub-circuit comprising a backwarded first diode and an antiparallel first switch arranged in series, the input sub-circuit and the antiparallel input sub-circuit being arranged between a DC source and a central node;
an output sub-circuit comprising a forwarded second diode and a second switch arranged in series, and an antiparallel input sub-circuit comprising a backwarded second diode and an antiparallel second switch arranged in series, the output sub-circuit and the antiparallel output sub-circuit being arranged between the central node and a load; and
a central sub-circuit comprising an inductance in series with and directly connected to a parallel arrangement of: (i) a first capacitance, (ii) a forwarded third diode and a third switch arranged in series, and (iii) a backwarded fourth diode and a fourth switch arranged in series.

The bidirectional DC/DC converter may be used, for instance, to load a Battery (e.g. an accumulator or similar devices, e.g. a capacitor) on the "input side" of the converter. For enabling this, the input sub-circuit gets - additionally to the input sub-circuit of the unidirectional DC/DC converter as described above - an antiparallel input sub-circuit, the antiparallel input sub-circuit being arranged in parallel to the input sub-circuit, wherein the diode of the antiparallel input sub-circuit (i.e. the "backwarded first diode") is arranged in a direction reverse to the forwarded first diode. Additionally, the output sub-circuit gets an antiparallel output sub-circuit, whose diode (i.e. the "backwarded second diode") is arranged in a direction reverse to the forwarded second diode.

Further additionally, the central sub-circuit of the bidirectional converter is slightly modified: The branch with the fourth diode gets a (fourth) switch arranged in series with the backwarded fourth diode. This modification makes it also possible to reverse the polarity of the power source at the input terminal (e.g. the DC source's minus connected to the input terminal, instead of plus) and/or at the output terminal.

An aspect relates to an uninterruptible power supply, UPS, comprising:
a DC input sub-circuit comprising a forwarded first diode and a first switch arranged in series, and an antiparallel input sub-circuit comprising a backwarded first diode and an antiparallel first switch arranged in series, the input sub-circuit and the antiparallel input sub-circuit being arranged between a DC source and a central node;
an AC input sub-circuit comprising a forwarded fifth diode and a fifth switch arranged in series, and an antiparallel AC input sub-circuit comprising a backwarded fifth diode and an antiparallel fifth switch arranged in series, the AC input sub-circuit and the antiparallel AC input sub-circuit being arranged between a AC source and the central node;
an output sub-circuit comprising a forwarded second diode and a second switch arranged in series, and an antiparallel output sub-circuit comprising a backwarded second diode and an antiparallel second switch arranged in series, the output sub-circuit and the antiparallel output sub-circuit being arranged between the central node and a load; and
a central sub-circuit comprising an inductance in series with and directly connected to a parallel arrangement of: a first capacitance, a forwarded third diode and a third switch arranged in series, and a backwarded fourth diode and a fourth switch arranged in series.

Compared to the bidirectional DC/DC converter, the UPS has an additional AC branch, comprising the AC input sub-circuit and the antiparallel AC input sub-circuit. At every conversion cycle, the AC source is checked for its current voltage. When the AC source's current voltage is high enough, power is taken from the AC source. When the AC source's current voltage is not high enough, power is taken from the DC source. When the AC source's current voltage is high enough and the DC source (e.g. an accumulator) needs power, power is taken from the AC source and the DC source may be charged.

Note that the hardware of the AC branch looks the same as the hardware of the DC branch (comprising a DC input sub-circuit and an antiparallel input sub-circuit); only the control of AC branch's switches need to be changed. This allows advantageously a very modular design of the UPS and/or the converters.

In various embodiments, the UPS or the bidirectional DC/DC converter further comprises an additional DC input sub-circuit and an additional antiparallel input sub-circuit that are arranged between a second DC source and the central node, wherein a second terminal of the DC source and a second terminal of the second DC source are connected to ground. The DC/DC converter may be considered as a UPS without AC branch. This arrangement advantageously allows to deliver also a negative half-wave to the central node and, consequently, to the central sub-circuit. This may allow to provide a positive DC at the UPS' output terminal, a negative DC, and/or to provide an AC output. As a consequence, the bidirectional DC/DC converter (and the respective part of the UPS) can also be operated as a DC/AC converter, as a AC/DC converter, and/or as a AC/AC converter. For an AC output, the four quarters (Q1 - Q4) of a sine may be operated like this: In Q1, the energy of the inductance is stepwise - i.e. in a sine-form - increased, in positive direction; in Q2 the energy of the inductance is stepwise (in a sine-form) decreased; in Q3, the energy of the inductance is stepwise (in a sine-form) increased, in negative direction; in Q4 the energy of the inductance is stepwise (in a sine-form) decreased.

In various embodiments, the UPS further comprises one or more additional AC input sub-circuits and antiparallel AC input sub-circuits. This is particularly advantageous for, e.g., supporting a UPS that is connected to a three-phase high-power source. In this case, the mid of a three-phase Y or Delta arrangement may be connected to the ground between the DC sources and/or to the ground of the load.

In various embodiments, the UPS further comprises one or more additional DC input sub-circuits and antiparallel input sub-circuits. This is particularly advantageous for, e.g., supporting a plurality of solar panels and/or other sources of renewable energy.

In various embodiments, the UPS further comprises one or more additional output sub-circuits and antiparallel output sub-circuits. This is particularly advantageous for, e.g., a UPS for a plurality of DC loads.

In various embodiments, the switches of the unidirectional DC/AC converter, of the bidirectional DC/AC converter, and/or of the UPS are implemented as a MOSFET, an IGBT, a thyristor, a silicon carbide, SiC, and/or a gallium nitride, GaN, semiconductor.

In various embodiments, the various types of converters and/or the UPS are designed for a DC voltage source with a voltage between 100 V and 1500 V, particularly between 200 V and 800 V. The voltage range of the converter may vary from a few Volts (say: 5 V) to more than 3000 V, which corresponds to double the voltage of, e.g., commercially available IGBTs. Hence, the DC/DC converter can be used for a broad range of DC - and, if applicable, AC - voltage sources, both for small and middle-range devices, but also for high-power converters, including, e.g., converters for charging electric vehicles, servers and/or server farms, for an intermediate device (i.e. between generating, storing and consumer units) for renewable energy.

In some embodiments, the switches of the unidirectional DC/AC converter, of the bidirectional DC/AC converter, and/or of the UPS are implemented as a MOSFET with a body diode, and the body diode substitutes the diode of the antiparallel sub-circuit. The body diode is sometimes called the "inverted diode" of the MOSFET. In this case, the switches of the input sub-circuit, the output sub-circuit, and/or the central sub-circuit are arranged in series, with the corresponding body diodes each arranged in opposite direction. Furthermore, the control may use the body diodes only in the last phase of unloading the inductance. This may advantageously minimize the energy through the body diodes, thus preventing them from overheating.

In various embodiments, the central sub-circuit is operated at a frequency between 10 kHz and 200 kHz, particularly between 20 kHz and 100 kHz, particularly between 40 kHz and 70 kHz, at about 50 kHz. To give an impression for dimensioning: For frequencies around 50 kHz, for example a first capacitance of less than or about 5 µF may be used, and an inductance of less than or about 5 µH. The first capacitance may be significantly smaller than the second capacitance at the output. For a DC output, a second capacitance between, e.g., 50 µF and 500 µF may be taken, For an AC output, a second capacitance between, e.g., 15 µF and 100 µF.

An aspect relates to a use of a unidirectional DC/AC converter, a bidirectional DC/AC converter, and/or a UPS as described above and/or below for providing a DC power output, and/or use of a bidirectional DC/AC converter, and/or a UPS as described above and/or below for providing an AC power output, and a DC power input or an AC power input.

An aspect relates to a method for operating a unidirectional DC/DC converter as described above and/or below in a first mode, the method comprising the steps of: opening all switches; closing the first switch; opening the first switch; closing the second switch; and opening all switches. One conversion cycle may last from the first "opening all switches" to the last "opening all switches". This mode may be a so-called buck mode, i.e. with Uₒᵤₜ < Uᵢₙ. In this mode, the third switch may be kept open, and only the switching frequency of the first switch may be varied, depending on the desired output voltage Uₒᵤₜ. For this method, the third diode and the third switch is always open and, thus, could be abandoned.

An aspect relates to a method for operating a unidirectional DC/DC converter as described above and/or below in a second mode, the method comprising the steps of: opening all switches; closing the first switch and the third switch; opening the third switch; opening the first switch; closing the second switch (sometimes along with the fourth switch); and opening all switches. One conversion cycle may last from the first "opening all switches" to the last "opening all switches". This mode may be a so-called boost mode, i.e. with Uₒᵤₜ > Uᵢₙ.

An aspect relates to a method for operating a UPS as described above and/or below, the method comprising the steps of:
opening all switches; closing the fifth switch and the third switch (for getting power from the AC branch); opening the third switch; opening the fifth switch; closing the second switch (sometimes along with the fourth switch); and opening all switches.

Note that this method only describes the positive half-wave. For the negative half-wave, the antiparallel fifth switch is used, instead of the fifth switch.

In various embodiments, the methods described above for operating a unidirectional DC/DC converter and for operating a UPS are used in a mutually exclusive way. For instance, as long as the AC source(s) work(s) fine, power from the AC branch is used; when the power from the AC source (via the AC branch) is not sufficient, power from the DC source(s) is used. This may be decided, e.g. by a control device, right before each conversion cycle.

In various embodiments, the duration of step "opening all switches" is between 0.5 us and 1000 µs (or may be even longer if the load is very low), particularly between 1 µs and 200 µs. The duration may depend on the frequency the central sub-circuit is operated with. This step may also be called "pausing step" or "pause". The duration of the pause may influence the output's power and/or voltage.

An aspect relates to a non-transitory computer-readable storage medium comprising computer program instructions stored therein, which, when executed on a control device that is configured for controlling controllable switches of a unidirectional DC/AC, of a bidirectional DC/AC converter, and/or of a UPS as described above and/or below, instructs the control device to perform the method described above and/or below.

It should be noted that two or more embodiments described above and/or below can be combined, as far as technically feasible. Particularly, any variations of the power converters - as far as technically feasible - can be applied to the UPS and vice versa.

For further clarification, the invention is described by means of embodiments shown in the figures. These embodiments are to be considered as examples only, but not as limiting.

### Brief Description of the Drawings

The drawings depict:
- **Fig. 1**: schematically a DC/DC converter according to an embodiment;
- **Fig. 2**: schematically a method according to an embodiment;
- **Fig. 3**: schematically a method according to an embodiment;
- **Fig. 4**: schematically a DC/AC converter according to an embodiment;
- **Fig. 5**: schematically a AC/AC or AC/DC converter according to an embodiment;
- **Fig. 6**: schematically a DC/DC converter according to an embodiment;
- **Fig. 7**: schematically a UPS according to an embodiment;
- **Fig. 8**: schematically a UPS according to an embodiment;
- **Fig. 9**: schematically a part of a converter or UPS according to an embodiment;
- **Fig. 10**: schematically a part of a converter or UPS according to an embodiment;
- **Fig. 11**: schematically a method according to an embodiment;
- **Fig. 12**: schematically a partial circuit according to an embodiment;
- **Fig. 13a, 13b**: signals of a UPS according to an embodiment;
- **Fig. 14** a: flow diagram according to an embodiment;
- **Fig. 15** a: flow diagram according to an embodiment;
- **Fig. 16** a: flow diagram according to an embodiment.

### Detailed Description of Embodiments

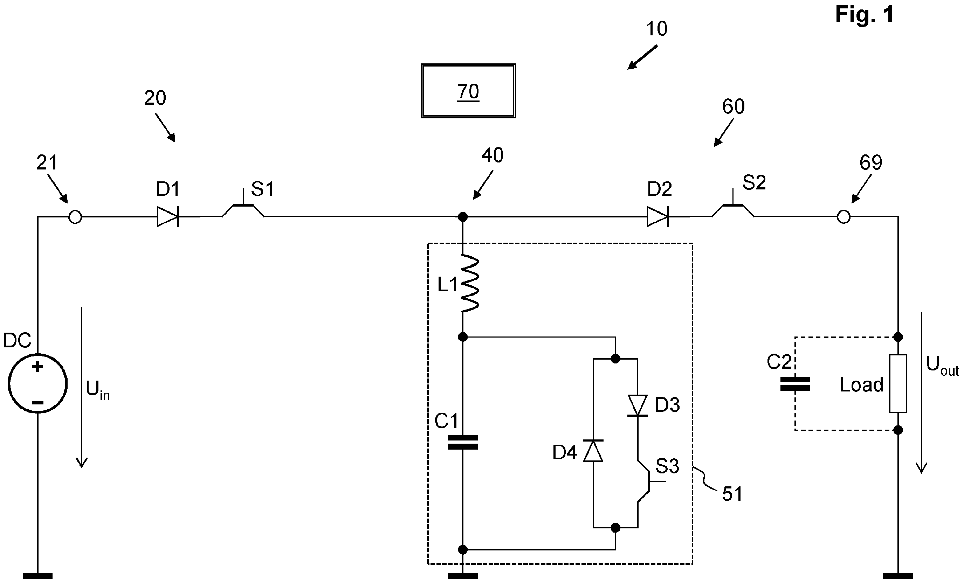

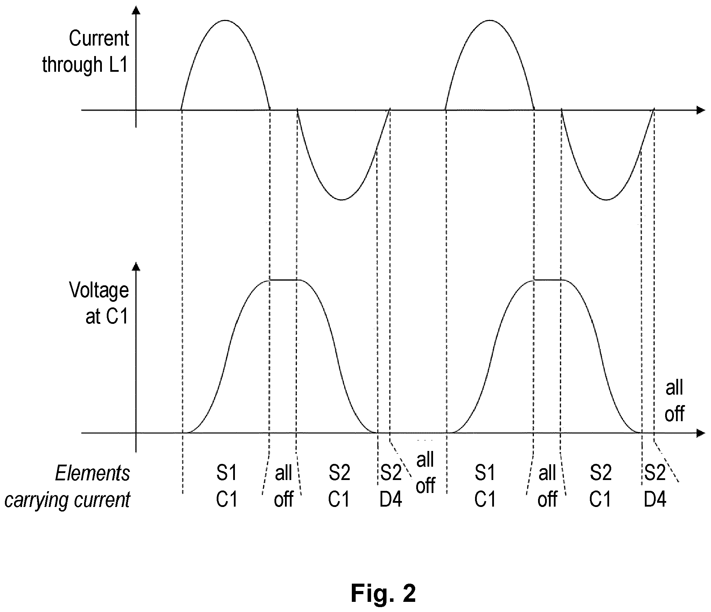

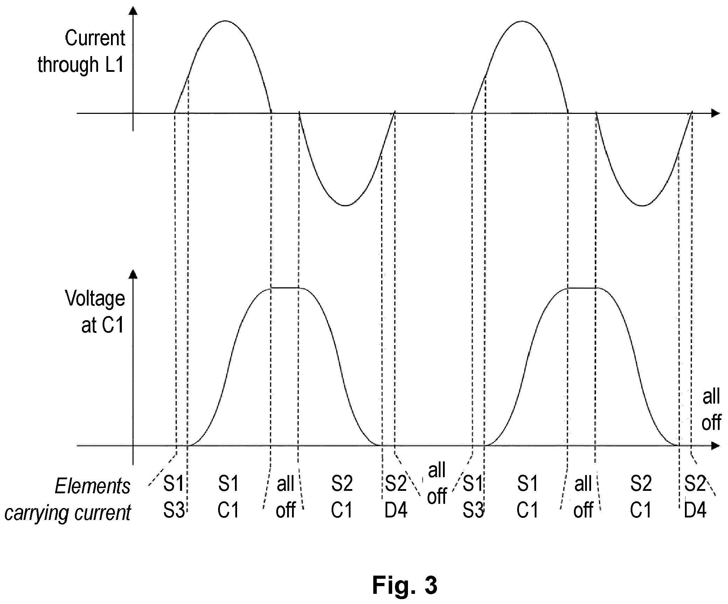

**Fig. 1** shows schematically a unidirectional DC/DC converter 10 according to an embodiment. The DC/DC converter 10 is connected to a DC source "DC", via an input terminal 21. The DC/DC converter 10 comprises a DC input sub-circuit 20. The input sub-circuit 20 is arranged between the DC source "DC" and a central node 40. The DC input sub-circuit 20 comprises a forwarded first diode D1 and a first switch S1 arranged in series. In the circuit shown, the DC input is connected to a plus terminal of the DC source. In this case, the diode's anode side is oriented towards the input terminal. If the DC input was connected to a minus terminal of the DC source, the forwarded first diode D1 diode's cathode side would oriented towards the input terminal, for the diode being "forwarded". The DC/DC converter 10 further comprises an output sub-circuit 60 comprising a forwarded second diode D2 and a second switch S2 arranged in series. The output sub-circuit 60 is arranged between the central node 40 and a load "Load", which is connected to an output terminal 69. The input voltage between the input terminal 21 and ground is called "Uᵢₙ", and the output voltage between output terminal 69 and ground is called "Uₒᵤₜ". Parallel to the load, a second capacitance C2 may be arranged, particularly for further reducing the output's ripple. Furthermore, the DC/DC converter 10 comprises a central sub-circuit 51. This central sub-circuit 51 comprises an inductance L1 in series with and directly connected to a parallel arrangement of: (i) a first capacitance C1, (ii) a forwarded third diode D3 and a third switch S3 arranged in series, and (iii) a backwarded fourth diode D4. The central sub-circuit 51 may be operated at frequencies above 10 kHz, e.g. at a frequency of 50 kHz. For frequencies around 50 kHz, for example the first capacitance C1 may have a capacity of less than or about 5 µF, and the inductance L1 may have a value of less than or about 5 µH. The first capacitance C1 may be significantly smaller than the second capacitance C2 at the output. For a DC output, a second capacitance between, e.g., 50 µF and 500 µF may be taken. The switches S1 - S3 may be controlled by a control device 70. The control device 70 may be operated according to a method, e.g., shown in **Fig. 2** and/or **Fig. 3**.

**Fig. 2** shows schematically a method of operating the DC/DC converter 10 of **Fig. 1** as a buck converter (Uₒᵤₜ < Uᵢₙ) according to an embodiment. As a starting step, all switches S1 - S3 are open or opened. In a first step, the first switch S1 is closed, thus increasing current through inductance L1 (up to turning point) and voltage at capacitor (or capacitance) C1, up to a peak voltage of about 2 · Uᵢₙ, because of the resonance of the series-L1-C1-circuit. In a second step, the first switch S1 is opened. In a third step, the second switch S2, towards the output, is closed. In a fourth step, the fourth (not-controlled) diode D4 empties the energy in inductance L1. Note that the fourth diode D4 is a crucial component for finishing each conversion cycle correctly, i.e. to discharge the inductance L1without leaving energy in said inductance L1. Otherwise, the voltage of capacitor C1 would become negative and in the next step it would be impossible to "start from zero" for each conversion cycle, i.e. to start each conversion cycle from a condition where the series-L1-C1-circuit is completely "reset", i.e. the components of the series-L1-C1-circuit have zero current and voltage (possibly only having a very small - i.e. a very negligible - residual energy). Otherwise, the conversion would become instable. In a last step, all switches S1 - S3 are opened, thus finishing this conversion cycle. The temporal distance ("pause") to the next conversion cycle influences the voltage and/or energy to be transferred to the output. Note that switch S3 is not used for this method and, thus, could be abandoned.

**Fig. 3** shows schematically a method of operating the DC/DC converter 10 of **Fig. 1** as a boost converter (Uₒᵤₜ > Uᵢₙ) or for Uₒᵤₜ ≈ Uᵢₙ, according to an embodiment. As a starting step, all switches S1 - S3 are open or opened. In a first step, the first switch S1 and the third switch S3 is closed, thus shorting capacitor C1 and pre-charging inductance L1, before starting the oscillation of the series-L1-C1-circuit. The duration of the first step determines the current and/or energy that is injected to the inductance L1. In a second step, the third switch S3 is opened, thus increasing current through inductance L1 (up to turning point) and voltage at capacitor C1, up to a peak. In a third step, the first switch S1 is opened. In a fourth step, the second switch S2, towards the output, is closed. In a fifth step, the fourth (not-controlled) diode D4 empties the energy in inductance L1. In a last step, all switches S1 - S3 are opened, thus finishing this conversion cycle.

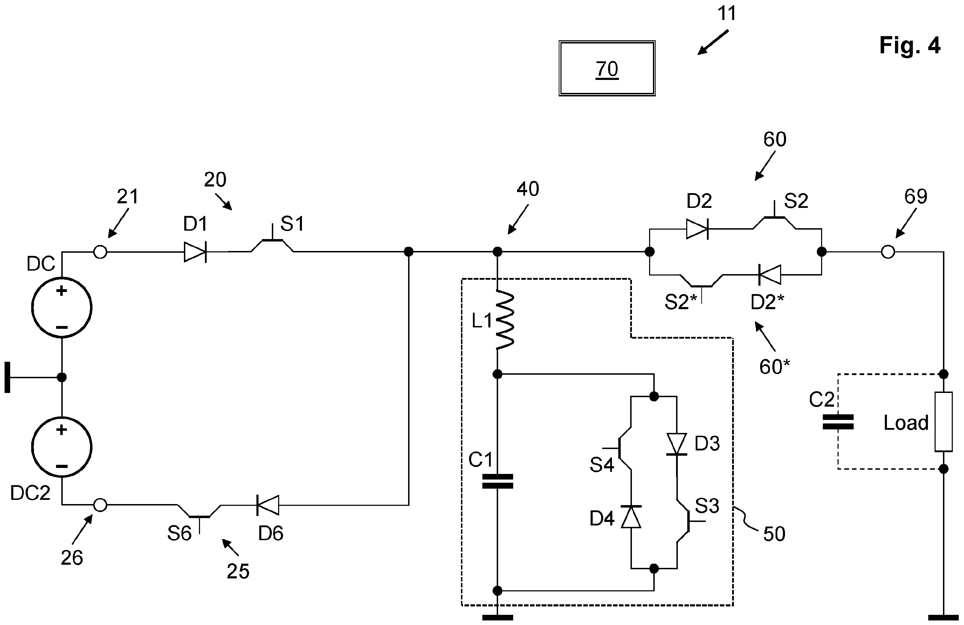

**Fig. 4** shows schematically a DC/AC converter 10 according to an embodiment. The DC/AC converter 10 comprises, compared to the DC/DC converter of **Fig. 1**, an additional DC input sub-circuit 25 comprising a forwarded sixth diode D6 and a sixth switch S6 arranged in series, arranged between a second DC source DC2 and the central node 40. A second terminal of the (first) DC source DC and a second terminal of the second DC source DC2 are connected to ground, This brings an (additional) negative half-wave to the a central sub-circuit 50, so that an AC-wave can be built, and the load can be supplied with an AC output. A capacitor C2, arranged parallel to the load, may have a smaller capacity than for an DC output.

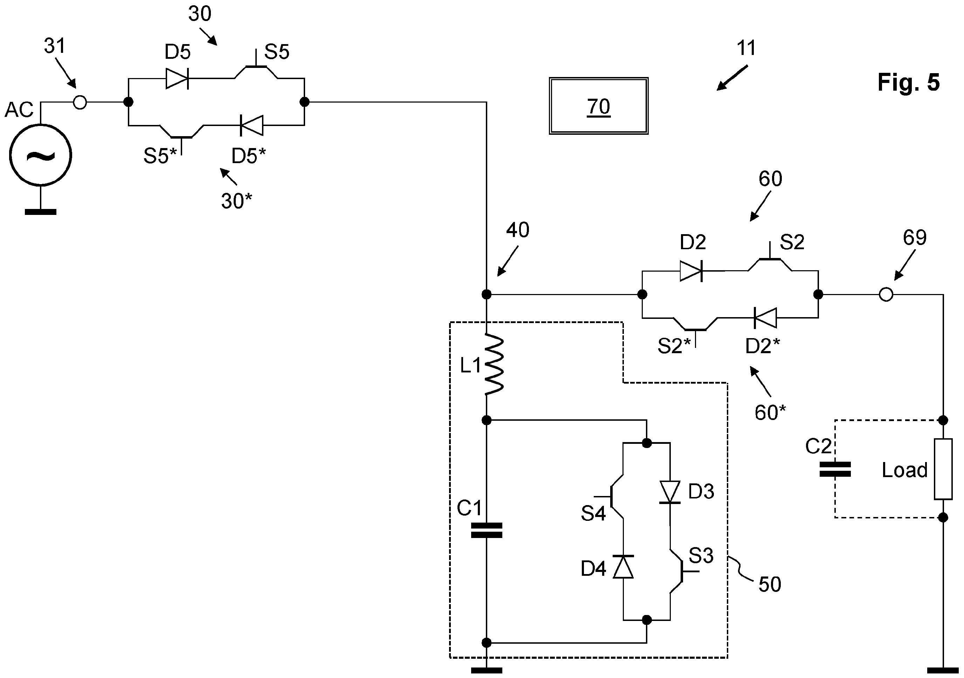

**Fig. 5** shows schematically a AC/AC or AC/DC converter 10 according to an embodiment. The AC/AC or AC/DC converter 10 comprises, compared to the DC/AC converter of **Fig. 4**, an AC input sub-circuit 30, instead of DC input sub-circuit 20 and the additional DC input sub-circuit 25 of **Fig. 4**. The AC input sub-circuit 30 comprises a forwarded fifth diode D5 and a fifth switch S5 arranged in series, and an antiparallel AC input sub-circuit 30* comprising a backwarded fifth diode D5* and an antiparallel fifth switch S5* arranged in series. The AC input sub-circuit 30 and the antiparallel AC input sub-circuit 30* are arranged between a AC source AC and the central node 40. The output power provided at the output terminal 69 can be either DC or AC. A capacitor C2, arranged parallel to the load, may have a smaller capacity for AC output than for DC output.

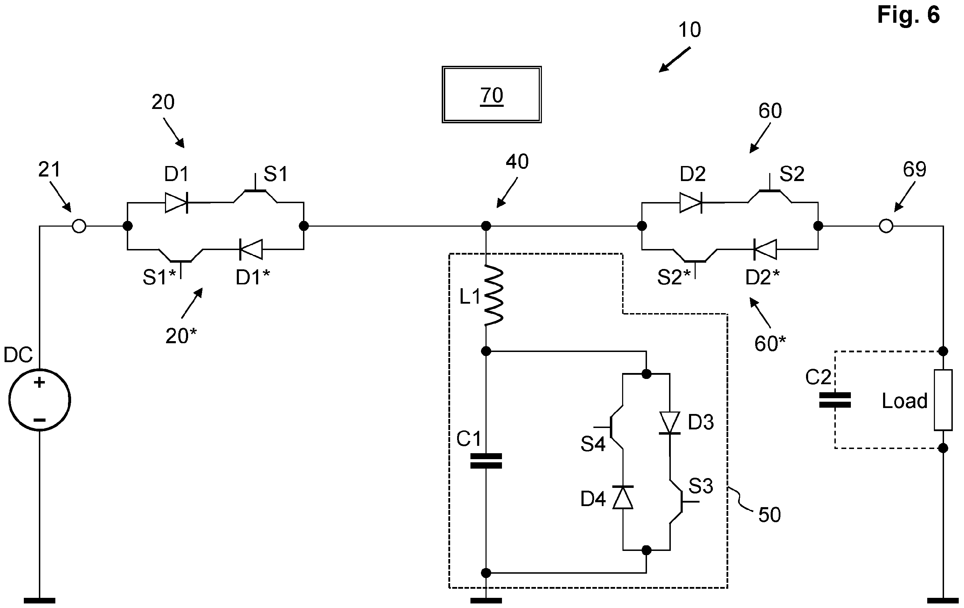

**Fig. 6** shows schematically a bidirectional DC/DC converter 10 according to an embodiment. The DC/DC converter 10 comprises a DC input sub-circuit 20 comprising a forwarded first diode D1 and a first switch S1 arranged in series, and an antiparallel input sub-circuit 20* comprising a backwarded first diode D1* and an antiparallel first switch S1* arranged in series, the input sub-circuit 20 and the antiparallel input sub-circuit 20* being arranged between a DC source DC and a central node 40. The DC/DC converter 10 further comprises an output sub-circuit 60 comprising a forwarded second diode D2 and a second switch S2 arranged in series, and an antiparallel output sub-circuit 60* comprising a backwarded second diode D2* and an antiparallel second switch S2* arranged in series, the output sub-circuit 60 and the antiparallel output sub-circuit 60* being arranged between the central node 40 and a load Load. Furthermore, the DC/DC converter 10 comprises a central sub-circuit 50 comprising an inductance L1 in series with and directly connected to a parallel arrangement of: (i) a first capacitance C1, (ii) a forwarded third diode (D3) and a third switch S3 arranged in series, and (iii) a backwarded fourth diode D4 and a fourth switch S4 arranged in series.

The DC/DC converter 10 of **Fig. 6** is bidirectional, because output terminal 69 can not only be used for connecting to a load, but also connecting to a power source for providing power. The power is, then led via the antiparallel output sub-circuit 60* to the central node 40 and, further, led to input terminal 21. The input terminal 21 may be connected to an accumulator. The accumulator may act as a DC source as long as power needs to be delivered to output terminal 69. When power is delivered from the output terminal 69, the accumulator may be charged. This may, e.g., be used for sources of renewable energy, whose power may vary during the day, and/or for many other purposes, e.g. for installations that are both able to charge electric vehicles (EV), but are also suited for using the EV's battery as power-buffer.The switches S1 - S4, S1* and S2* of **Fig. 6** may be controlled by a control device 70. The control device 70 may be operated according to a method, e.g., shown in **Fig. 2** and/or **Fig. 3**.

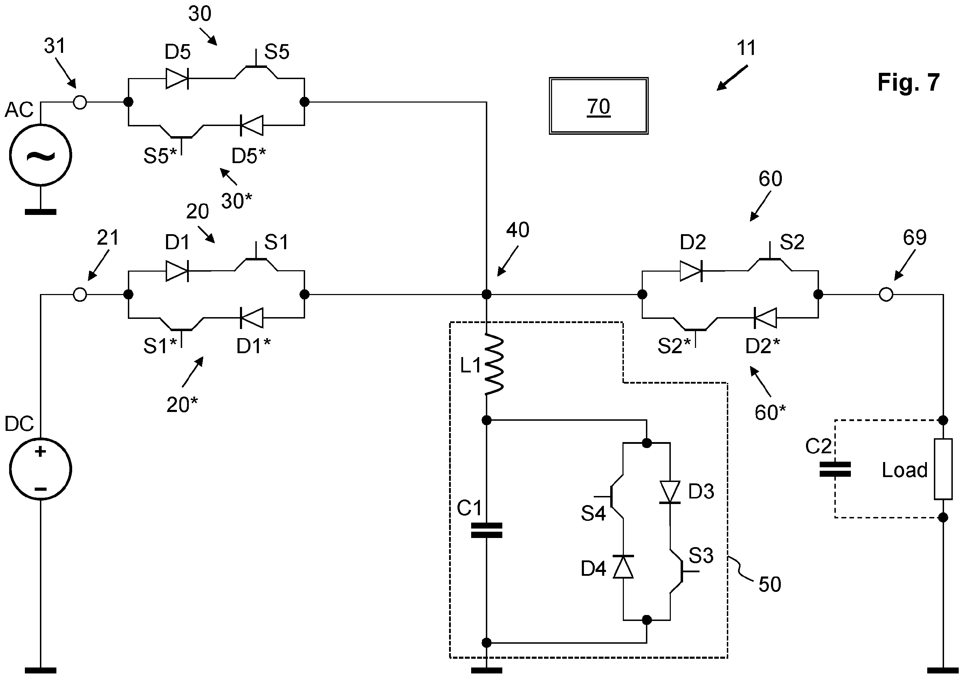

**Fig. 7** shows schematically a UPS 11 according to an embodiment. It is clearly visible that UPS 11 differs from the DC/DC converter 10 of **Fig. 6** by an additional AC branch comprising an AC input sub-circuit 30 and an antiparallel AC input sub-circuit 30*. The AC input sub-circuit 30 comprises a forwarded fifth diode D5 and a fifth switch S5 arranged in series. The antiparallel AC input sub-circuit 30* comprises a backwarded fifth diode D5* and an antiparallel fifth switch S5* arranged in series. The AC branch is arranged between a AC source "AC" and the central node 40.

At every conversion cycle, the AC source may be checked for its current voltage. When the AC source's current voltage is high enough, power is taken from the AC source. When the AC source's current voltage is not high enough, power is taken from the DC source. When the AC source's current voltage is high enough and the DC source (e.g. an accumulator) needs power, power is taken from the AC source and the DC source may be charged. The switches S1 - S5, S1*, S2* and S5* of **Fig. 7** may be controlled by a control device 70. The control device 70 may be operated according to a method, e.g., shown in **Fig. 2**, **Fig. 3** and/or **Fig. 11**.

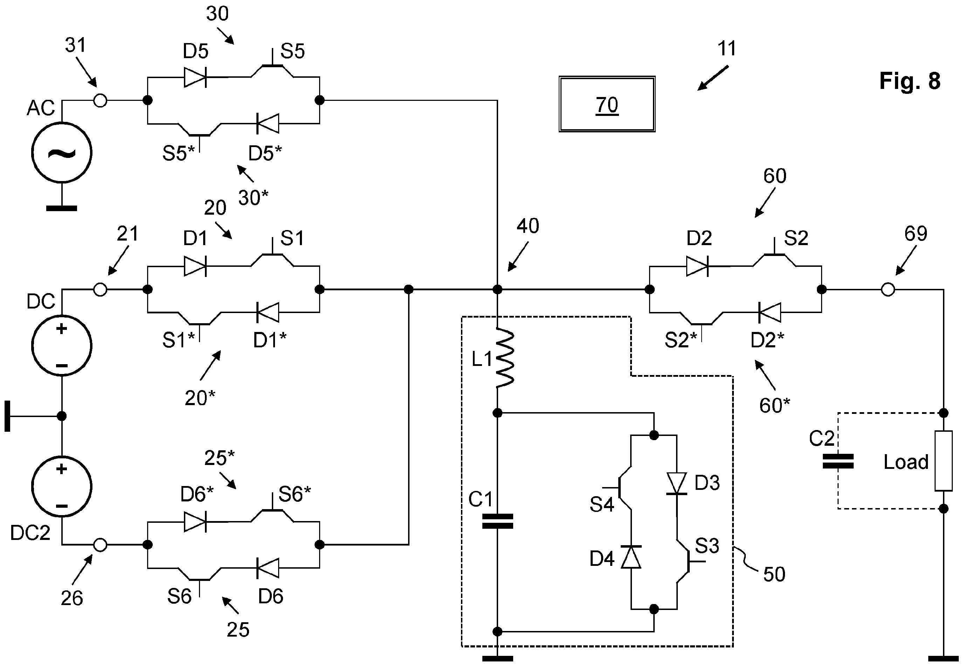

**Fig. 8** shows schematically a UPS 11 according to an embodiment. Compared to **Fig. 7**, the UPS 11 **Fig. 6** has an additional DC input sub-circuit 25, arranged between a second DC source DC2 and the central node 40. The DC input sub-circuit 25 comprises a forwarded sixth diode D6 and a sixth switch S6 arranged in series. The antiparallel DC input sub-circuit 25* comprises a backwarded sixth diode D6* and an antiparallel sixth switch S6* arranged in series. A second (minus) terminal of the DC source "DC" and a second (plus) terminal of the second DC source "DC2" are connected to ground. The switches S1 - S6, S1*, S2*, S5* and S6* of **Fig. 6** may be controlled by a control device 70. The control device 70 may be operated according to a method, e.g., shown in **Fig. 2**, **Fig. 3** and/or **Fig. 11**. Note that these figures only show the current through inductance L1 and the voltage at capacitor C1 for a positive half-wave. It is clear that for a negative half-wave the current through inductance L1 and the voltage at capacitor C1 have opposite directions.

Note that this additional DC input sub-circuit 25 can also be applied to the DC/DC converter 10 of **Fig. 6**, thus enabling said DC/DC converter 10 to build, additionally, a negative half-wave. This may also be used to build a DC/AC converter and/or to build a UPS with AC output.

As a variation, the UPS 11 of **Fig. 8** or **Fig. 7** may contain not only one AC branch, but a plurality of AC branches. For instance, when providing three AC branches, the UPS may be able to be connected to a 3-phase AC source, e.g. in Y or Delta configuration.

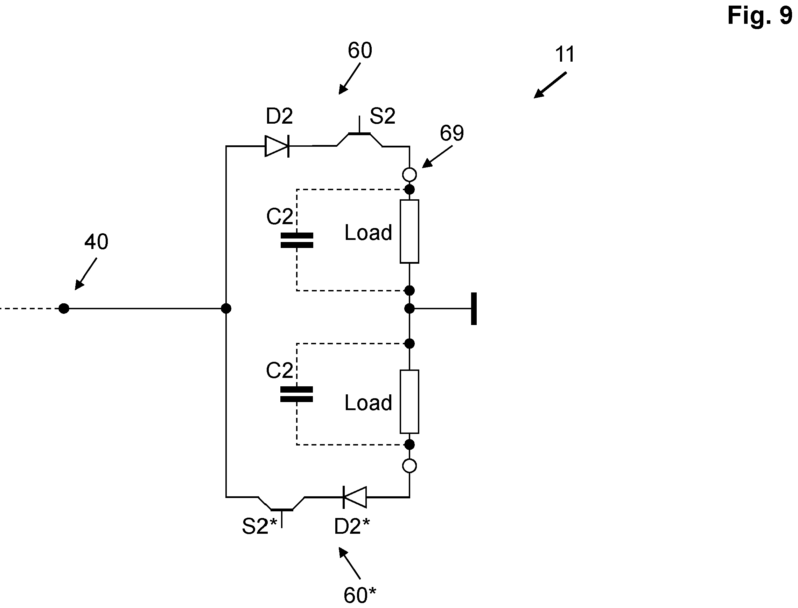

**Fig. 9** shows another embodiment of the UPS of **Fig. 8** according to an embodiment. For a clearer presentation, only a part of the UPS is shown, namely the part from the central node 40. The other parts of the circuit may be identical to the ones depicted in **Fig. 8**. In this embodiment, one load is connected between the output sub-circuit 60 and ground, and another load is connected between the antiparallel output sub-circuit 60* and ground. Note that this circuit part may also be applied, e.g., to the circuit of **Fig. 7**.

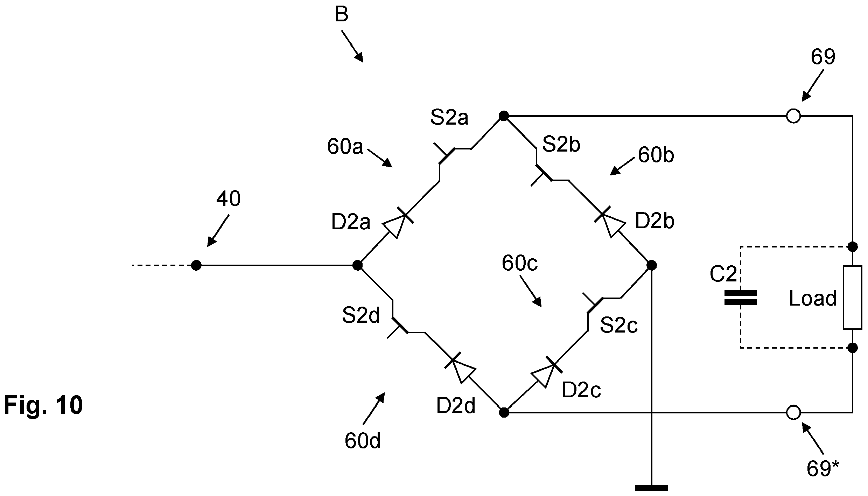

**Fig. 10** shows another embodiment of the UPS of **Fig. 7** **or** **8** and/or of the converter of any of **Figs. 1****,** **4****,** **5****, or** **6** according to an embodiment. For a clearer presentation, only a part of the converter or UPS is shown, namely the part from the central node 40. In **Fig. 10**, a bridge B is depicted as a bridge of four branches, each branch of the bridge comprising a diode D_a, D_b, D_c, D_d and a switch S_a, S_b, S_c, S_d arranged in series. In the example shown, the underscore "_" is substituted by a "2", for an analogous naming of the output sub-circuit 60. The bridge B of **Fig. 10** may substitute the output sub-circuit 60, as shown, e.g., in **Fig. 1**. This output bridge B may, for example, be applied to **Fig. 5**, for a AC/DC converter. For a bidirectional AC/DC converter, each branch 60a, 60b, 60c, 60d of the bridge B gets an antiparallel output sub-circuit branch 60a*, 60b*, 60c*, 60d* added (not shown in **Fig. 10**).

In an analogous way, the DC input sub-circuit 20 (and, if applicable, also the antiparallel DC input sub-circuit 20*) may be substituted by a "DC input bridge", which looks similar to the bridge B, which is shown in **Fig. 10** for the output part. For at least some purposes and/or applications, the AC input sub-circuit 30 (and, if applicable, also the antiparallel AC input sub-circuit 30*) may be substituted by an "AC input bridge", which looks similar to the bridge B.

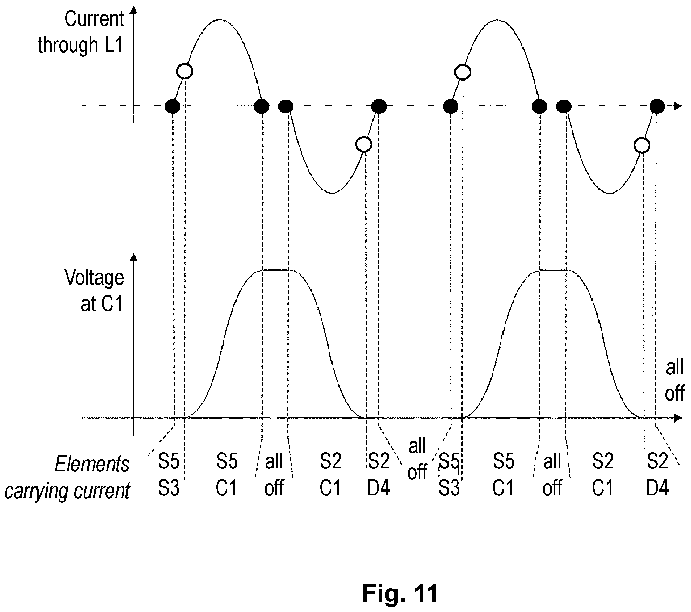

**Fig.** 11 shows schematically a method according to an embodiment. This method is able to use power from an AC source e.g. ("mains") and may work as a boost converter (Uₒᵤₜ > Uᵢₙ) or for Uₒᵤₜ ≈ Uᵢₙ, according to an embodiment. As a starting step, all switches S1 - S5, S1*, S2* and S5* (of **Fig. 7**, plus S6 and S6* of **Fig. 6**) are open or opened. In a first step, the fifth switch S5 and the third switch S3 are closed, thus shorting capacitor C1 and pre-charging the inductance L1, before starting the oscillation of the series-L1-C1-circuit. The duration of the first step determines the current and/or energy that is injected to the inductance L1. In a second step, the third switch S3 is opened, thus increasing current through inductance L1 (up to turning point) and voltage at capacitor C1, up to a peak. In a third step, the fifth switch S5 is opened. In a fourth step, the second switch S2, towards the output, and the fourth switch S4 are closed. In a fifth step, the fourth diode D4 empties, via S4, the energy in inductance L1. In a last step, all switches S1 - S4 are opened, thus finishing this conversion cycle. The filled circles in the diagram of current through inductance L1 mark a zero current transition, the hollow circles mark a zero voltage transition.

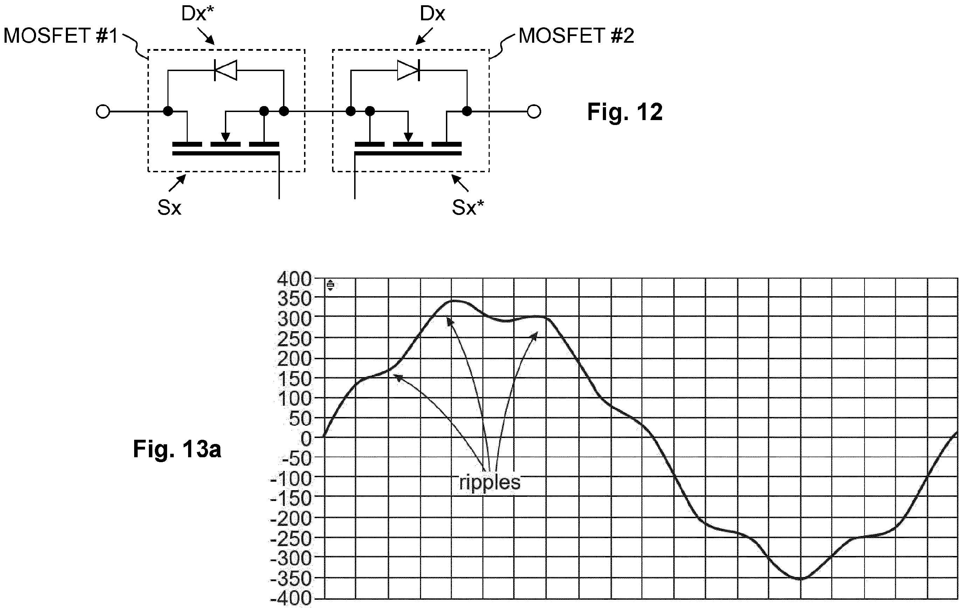

**Fig. 12** schematically shows a partial circuit according to an embodiment. This partial circuit is a variation of building a sub-circuit and its antiparallel input sub-circuit, e.g. the DC input sub-circuit 20 and the antiparallel input sub-circuit 20* of any of figures **Fig. 6** to **Fig. 6**. The partial circuit comprises two MOSFETs, i.e. MOSFET #1 and MOSFET #2. The body diode of MOSFET #2 serves as forwarded diode Dx of the sub-circuit comprising switch Sx and Dx, and the body diode of MOSFET #1 serves as backwarded diode Dx* of the antiparallel sub-circuit comprising switch Sx* and Dx*. To minimize the energy through the body diodes Dx and Dx* - e.g. for preventing them from overheating -, the control may use the body diodes only in the last phase of unloading the inductance.

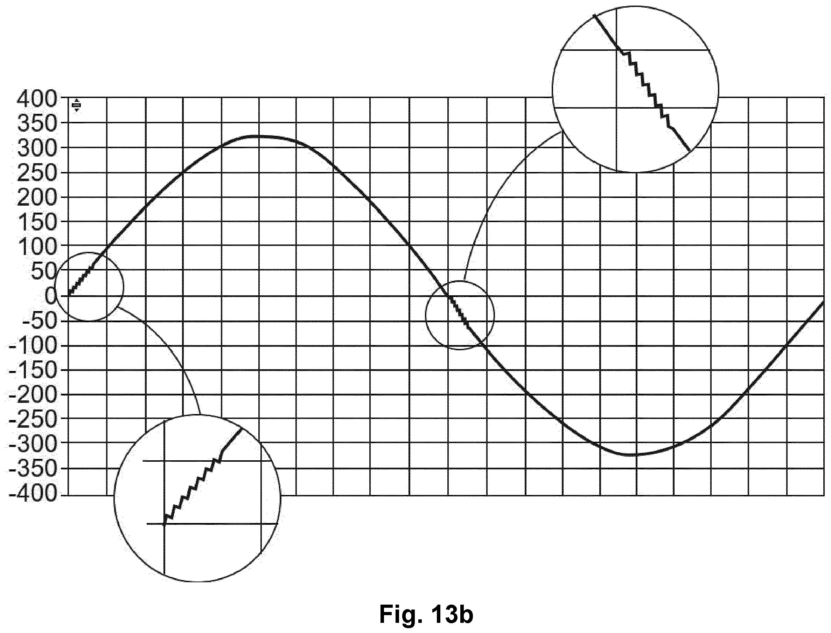

**Fig. 13a** and **13b** show signals of a UPS or of an AC/AC converter according to an embodiment. **Fig. 13a** shows an AC input signal with significant ripples, i.e. deviations for a pure sine curve. **Fig. 13b** shows an AC output signal, i.e. after having applied one of the methods described above and/or below, but with a small smoothing capacitor. It is clearly visible that this signal approaches a pure sine curve in a significantly better way than the AC input signal, in spite of the bad quality of this input signal. Furthermore, it is clearly visible that this "close-to-sine curve" is built of waves of essentially higher frequency. For instance, the "close-to-sine curve" may have a frequency of 50 Hz or 60 Hz, whereas the partial curves the "close-to-sine curve" is built of has a frequency higher (or much higher) than, e.g., 10 kHz. In addition, "pauses" are clearly visible, nearby the value zero of this "close-to-sine curve".

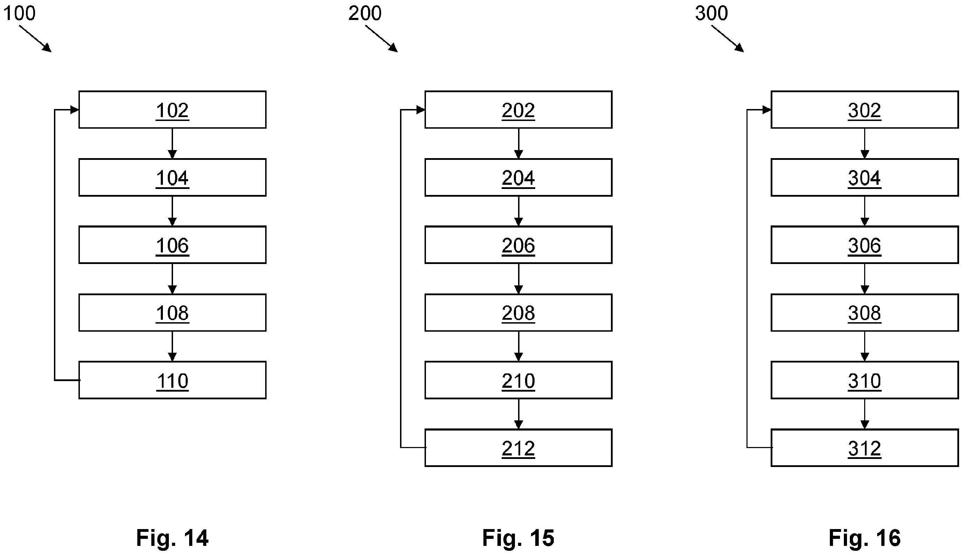

**Fig. 14** shows a flow diagram 100 according to an embodiment. This method may be used for operating the DC/DC converter 10 of **Fig. 1** as a buck converter (Uₒᵤₜ < Uᵢₙ). In a starting step 102, all switches S1 - S3 are open. In a step 104, the first switch S1 is closed, thus increasing current through inductance L1 and voltage at capacitor C1. In a step 106, the first switch S1 is opened. In a step 108, the second switch S2, towards the output, is closed. In a step 110, the fourth (not-controlled) diode D4 empties the energy in inductance L1. In a step 102, all switches S1 - S3 are opened, thus finishing this conversion cycle. The temporal distance ("pause") to the next conversion cycle, starting with the step 104, influences the voltage and/or energy to be transferred to the output.

**Fig. 15** shows a flow diagram 200 according to an embodiment. This method may be used for operating the DC/DC converter 10 of **Fig. 1** as a boost converter (Uₒᵤₜ > Uᵢₙ) or for Uₒᵤₜ ≈ Uᵢₙ. As a starting step 202, all switches S1 - S3 are open or opened. In a step 204, the first switch S1 and the third switch S3 are closed, thus shorting capacitor C1 and pre-charging inductance L1, before starting the oscillation of the series-L1-C1-circuit. The duration of the step 204 determines the current and/or energy that is injected to the inductance L1. In a step 206, the third switch S3 is opened, thus increasing current through inductance L1 and voltage at capacitor C1. In a step 208, the first switch S1 is opened. In a step 210, the second switch S2, towards the output, and the fourth switch S4 are closed. In a step 212, the fourth (not-controlled) diode D4 empties the energy in inductance L1. In a last step, which is equal to step 202, all switches S1 - S4 are opened, thus finishing this conversion cycle.

**Fig. 16** shows a flow diagram 300 according to an embodiment. This method is able to use power from an AC source e.g. ("mains") and may work as a boost converter (Uₒᵤₜ > Uᵢₙ) or for Uₒᵤₜ ≈ Uᵢₙ, according to an embodiment. As a starting step 302, all switches S1 - S5, S1*, S2* and S5* (of **Fig. 7**, plus S6 and S6* of **Fig. 6**) are open or opened. In a step 304, the fifth switch S5 and the third switch S3 are closed, thus shorting capacitor C1 and pre-charging the inductance L1, before starting the oscillation of the series-L1-C1-circuit. The duration of this step determines the current and/or energy that is injected into the inductance L1. In a step 306, the third switch S3 is opened, thus increasing current through inductance L1 and voltage at capacitor C1. In a step 308, the fifth switch is opened. In a fourth step 310, the second switch S2, towards the output, and the fourth switch S4 are closed. In a step 312, the fourth diode D4 empties the energy in inductance L1. In a last step, which equals step 302, all switches S1 - S4 are opened, thus finishing this conversion cycle.

### List of Reference Symbols

- 10: DC/DC, DC/AC, AC/DC, AC/AC converter
- 11: uninterruptible power supply, UPS
- 20: DC input sub-circuit
- 20*: antiparallel DC input sub-circuit
- 21: input terminal
- 30: AC input sub-circuit
- 30*: antiparallel AC input sub-circuit
- 40: central node
- 50, 51: central sub-circuit
- 60: output sub-circuit
- 60*: antiparallel output sub-circuit
- 69: output terminal
- 70: control device
- AC: AC source
- B: bridge (of 4 branches)
- C1: first capacitance
- C2: second capacitance
- D1, D2,: forwarded first, second, ... diode
- D1*, D2*,: backwarded first, second, ... diode
- DC: DC source
- DC2: second DC source
- L1: inductance
- S1, S2,: first, second, ... switch
- S1*, S2*,: antiparallel first, second, ... switch

## Claims

1. A unidirectional DC/DC converter (10), comprising:
a DC input sub-circuit (20) comprising a forwarded first diode (D1) and a first switch (S1) arranged in series, the input sub-circuit (20) being arranged between a DC source (DC) and a central node (40);
an output sub-circuit (60) comprising a forwarded second diode (D2) and a second switch (S2) arranged in series, the output sub-circuit (60) being arranged between the central node (40) and a load (Load); and
a central sub-circuit (51) comprising an inductance (L1) in series with and directly connected to a parallel arrangement of: (i) a first capacitance (C1), (ii) a forwarded third diode (D3) and a third switch (S3) arranged in series, and (iii) a backwarded fourth diode (D4).

2. A unidirectional DC/AC converter (10), comprising:
a DC input sub-circuit (20) comprising a forwarded first diode (D1) and a first switch (S1) arranged in series, the input sub-circuit (20) being arranged between a DC source (DC) and a central node (40);
an additional DC input sub-circuit (25) comprising a forwarded sixth diode (D6) and a sixth switch (S6) arranged in series, arranged between a second DC source (DC2) and the central node (40),
wherein a second terminal of the DC source (DC) and a second terminal of the second DC source (DC2) are connected to ground,
an output sub-circuit (60) comprising a forwarded second diode (D2) and a second switch (S2) arranged in series, and an antiparallel output sub-circuit (60*) comprising a backwarded second diode (D2*) and an antiparallel second switch (S2*) arranged in series, the output sub-circuit (60) and the antiparallel output sub-circuit (60*) being arranged between the central node (40) and a load (Load); and
a central sub-circuit (50) comprising an inductance (L1) in series with and directly connected to a parallel arrangement of: (i) a first capacitance (C1), (ii) a forwarded third diode (D3) and a third switch (S3) arranged in series, and (iii) a backwarded fourth diode (D4) and a fourth switch (S4) arranged in series.

3. A unidirectional AC/AC converter (10) or AC/DC converter (10), comprising:
an AC input sub-circuit (30) comprising a forwarded fifth diode (D5) and a fifth switch (S5) arranged in series, and an antiparallel AC input sub-circuit (30*) comprising a backwarded fifth diode (D5*) and an antiparallel fifth switch (S5*) arranged in series, the AC input sub-circuit (30) and the antiparallel AC input sub-circuit (30*) being arranged between a AC source (AC) and the central node (40);
an output sub-circuit (60) comprising a forwarded second diode (D2) and a second switch (S2) arranged in series, and an antiparallel output sub-circuit (60*) comprising a backwarded second diode (D2*) and an antiparallel second switch (S2*) arranged in series, the output sub-circuit (60) and the antiparallel output sub-circuit (60*) being arranged between the central node (40) and a load (Load); and
a central sub-circuit (50) comprising an inductance (L1) in series with and directly connected to a parallel arrangement of: (i) a first capacitance (C1), (ii) a forwarded third diode (D3) and a third switch (S3) arranged in series, and (iii) a backwarded fourth diode (D4) and a fourth switch (S4) arranged in series.

4. A bidirectional DC/DC converter (10), comprising:
a DC input sub-circuit (20) comprising a forwarded first diode (D1) and a first switch (S1) arranged in series, and an antiparallel input sub-circuit (20*) comprising a backwarded first diode (D1*) and an antiparallel first switch (S1*) arranged in series, the input sub-circuit (20) and the antiparallel input sub-circuit (20*) being arranged between a DC source (DC) and a central node (40);
an output sub-circuit (60) comprising a forwarded second diode (D2) and a second switch (S2) arranged in series, and an antiparallel output sub-circuit (60*) comprising a backwarded second diode (D2*) and an antiparallel second switch (S2*) arranged in series, the output sub-circuit (60) and the antiparallel output sub-circuit (60*) being arranged between the central node (40) and a load (Load); and
a central sub-circuit (50) comprising an inductance (L1) in series with and directly connected to a parallel arrangement of: (i) a first capacitance (C1), (ii) a forwarded third diode (D3) and a third switch (S3) arranged in series, and (iii) a backwarded fourth diode (D4) and a fourth switch (S4) arranged in series.

5. An uninterruptible power supply, UPS (11), comprising:
a DC input sub-circuit (20) comprising a forwarded first diode (D1) and a first switch (S1) arranged in series, and an antiparallel input sub-circuit (20*) comprising a backwarded first diode (D1*) and an antiparallel first switch (S1*) arranged in series, the input sub-circuit (20) and the antiparallel input sub-circuit (20*) being arranged between a DC source (DC) and a central node (40);
an AC input sub-circuit (30) comprising a forwarded fifth diode (D5) and a fifth switch (S5) arranged in series, and an antiparallel AC input sub-circuit (30*) comprising a backwarded fifth diode (D5*) and an antiparallel fifth switch (S5*) arranged in series, the AC input sub-circuit (30) and the antiparallel AC input sub-circuit (30*) being arranged between a AC source (AC) and the central node (40);
an output sub-circuit (60) comprising a forwarded second diode (D2) and a second switch (S2) arranged in series, and an antiparallel output sub-circuit (60*) comprising a backwarded second diode (D2*) and an antiparallel second switch (S2*) arranged in series, the output sub-circuit (60) and the antiparallel output sub-circuit (60*) being arranged between the central node (40) and a load (Load); and
a central sub-circuit (50) comprising an inductance (L1) in series with and directly connected to a parallel arrangement of: (i) a first capacitance (C1), (ii) a forwarded third diode (D3) and a third switch (S3) arranged in series, and (iii) a backwarded fourth diode (D4) and a fourth switch (S4) arranged in series.

6. The UPS (11) of claim 5 or the bidirectional DC/DC converter (10) of claim 4, further comprising an additional DC input sub-circuit (25) and an additional antiparallel input sub-circuit (25*), arranged between a second DC source (DC2) and the central node (40),
wherein a second terminal of the DC source (DC) and a second terminal of the second DC source (DC2) are connected to ground.

7. The UPS (11) of claim or 6, further comprising one or more additional AC input sub-circuits (30)and antiparallel AC input sub-circuits (30*), and/or
comprising one or more additional DC input sub-circuits (30) and antiparallel input sub-circuits (20*), and/or
comprising one or more additional output sub-circuits (60) and antiparallel output sub-circuits (60*).

8. The unidirectional DC/DC converter (10) of claim 1, the unidirectional DC/AC converter (10) of claim 2, the unidirectional AC/AC converter (10) or AC/DC converter (10) of claim 3, the bidirectional DC/DC converter (10) of claim 4, and/or the UPS (11) of claim 5, 6 or 7,
wherein the output sub-circuit (60) and the antiparallel output sub-circuit (60*) and/or
the DC input sub-circuit (20) and the antiparallel DC input sub-circuit (20*) and/or
the AC input sub-circuit (30) and the antiparallel AC input sub-circuit (30*)
is designed as a bridge (B) of four branches, each branch (60a, 20a, 30a, ...) of the bridge (B) comprising a diode (D_a, D_b, D_c, D_d) and a switch (S_a, S_b, S_c, S_d) arranged in series.

9. The unidirectional DC/DC converter (10) of claim 1, the unidirectional DC/AC converter (10) of claim 2, the unidirectional AC/AC converter (10) or AC/DC converter (10) of claim 3, the bidirectional DC/DC converter (10) of claim 4, and/or the UPS (11) of claim 5, 6 or 7,
wherein the switches (S1, S1*, ... S6, S6*) are implemented as a MOSFET, an IGBT, a thyristor, a silicon carbide, SiC, and/or a gallium nitride, GaN, semiconductor.

10. The unidirectional DC/AC converter (10) of claim 2, the unidirectional AC/AC converter (10) or AC/DC converter (10) of claim 3, the bidirectional DC/DC converter (10) of claim 4, and/or the UPS (11) of claim 5, 6 or 7,
wherein the switches (S1, S1*, ... S6, S6*) are implemented as a MOSFET with a body diode, and the body diode substitutes the diode (D1, D1*, ... D6, D6*) of the antiparallel sub-circuit.

11. The unidirectional DC/DC converter (10) of claim 1, the unidirectional DC/AC converter (10) of claim 2, the unidirectional AC/AC converter (10) or AC/DC converter (10) of claim 3, the bidirectional DC/DC converter (10) of claim 4, and/or the UPS (11) of claim 5, 6 or 7,
wherein the central sub-circuit (50, 51) is operated at a frequency between 10 kHz and 200 kHz, particularly between 20 kHz and 100 kHz, particularly between 40 kHz and 70 kHz, at about 50 kHz.

12. Use of a unidirectional DC/DC converter (10) of claim 1, a unidirectional AC/DC converter (10) of claim 3, a bidirectional DC/DC converter (10) of claim 4, and/or a UPS (11) of claim 5, 6 or 7 for providing a DC power output, and/or
use of a unidirectional DC/AC converter (10) of claim 2, a unidirectional AC/AC converter (10) of claim 3, bidirectional DC/AC converter (10) of claim 4, and/or a UPS (11) of claim 5, 6 or 7 for providing an AC power output, with a DC power input or an AC power input.

13. A method for operating a DC/DC converter (10) according to claim 1 or 2 in a first mode, the method comprising the steps of:
opening all switches (S1 - S3);
closing the first switch (S1);
opening the first switch (S1);
closing the second switch (S2); and
opening all switches (S1 - S3).

14. A method for operating a DC/DC converter (10) according to claim 1 or 2 and/or a UPS (11) of claim 5, 6 or 7 in a second mode, the method comprising the steps of:
opening all switches (S1 - S3);
closing the first switch (S1) and the third switch (S3);
opening the third switch (S3);
opening the first switch (S1);
closing the second switch (S2); and
opening all switches (S1 - S3).

15. A method for operating an AC/AC converter (10) or AC/DC converter (10) according to claim 3, a UPS (11) according to claim 5, 6 or 7 in a third mode, the method comprising the steps of:
opening all switches (S1 - S3);
closing the fifth switch (S5) and the third switch (S3);
opening the third switch (S3);
opening the fifth switch (S5);
closing the second switch (S2); and
opening all switches (S1 - S3).

16. The method of claim 13 or 14 for operating a UPS (11) according to claim 5, 6 or 7, wherein the UPS (11) is either operated according to claim 10 or operated according to claim 11, in a mutually exclusive way.

17. The method of any of claims12 -15 for operating a unidirectional DC/AC converter (10) of claim 1, the bidirectional DC/AC converter (10) of claim 4, the UPS (11) of claim 5, 6 or 7,
wherein the duration of step "opening all switches" is between 0.5 µs and 1000 µs, particularly between 1 µs and 200 µs.

18. A non-transitory computer-readable storage medium comprising computer program instructions stored therein, which, when executed on a control device (70) that is configured for controlling controllable switches (S1, S1*, ... S6, S6*) of a unidirectional DC/AC converter (10) of claim 1, of a unidirectional DC/AC converter (10) of claim 2, of a unidirectional AC/AC converter (10) or AC/DC converter (10) of claim 3, of a bidirectional DC/AC converter (10) of claim 4, or of a UPS (11) of claim 5, 6 or 7, instructs the control device (70) to perform the method according to any of claims 12 - 16.
